(19) Europäisches Patentamt
European Patent Office
Office européen des brevets

(11) **EP 2 779 025 B1**

(12) **EUROPEAN PATENT SPECIFICATION**

(45) Date of publication and mention
of the grant of the patent:
**16.02.2022 Bulletin 2022/07**

(21) Application number: **14158802.0**

(22) Date of filing: **11.03.2014**

(51) International Patent Classification (IPC):
**G06K 9/00** *(2022.01)*

(52) Cooperative Patent Classification (CPC):
**G06V 20/588**

(54) **Method and system for detecting road edge**

Verfahren und Vorrichtung zur Erkennung einer Straßenkante

Procédé et système de détection de bord de route

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2013 CN 201310075780**

(43) Date of publication of application:
**17.09.2014 Bulletin 2014/38**

(73) Proprietor: **Ricoh Company, Ltd.
Tokyo 143-8555 (JP)**

(72) Inventors:
• **You, Ganmei**
Haidian District,
**Beijing 100044 (CN)**
• **Chen, Chao**
Haidian District,
**Beijing 100044 (CN)**
• **Shi, Zhongchao**
Haidian District,
**Beijing 100044 (CN)**
• **Lu, Yaojie**
Haidian District,
**Beijing 100044 (CN)**
• **Wang, Gang**
Haidian District,
**Beijing 100044 (CN)**

(74) Representative: **Grant, David Michael et al
Marks & Clerk LLP
15 Fetter Lane
London EC4A 1BW (GB)**

(56) References cited:
• ZHENCHENG HU ET AL: "U-V-disparity: an efficient algorithm for stereovision based scene analysis", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 48-54, XP010833942, DOI: 10.1109/IVS.2005.1505076 ISBN: 978-0-7803-8961-8
• FLORIN ONIGA ET AL: "Curb Detection Based on a Multi-Frame Persistence Map for Urban Driving Scenarios", INTELLIGENT TRANSPORTATION SYSTEMS, 2008. ITSC 2008. 11TH INTERNATIONAL IEEE CONFERENCE ON, IEEE, PISCATAWAY, NJ, USA, 12 October 2008 (2008-10-12), pages 67-72, XP031383517, ISBN: 978-1-4244-2111-4
• Matthias Wandfluh: "Obstacle detection using V-disparity: Integration to the CRAB rover", , 1 January 2009 (2009-01-01), XP055209371, Retrieved from the Internet: URL:http://students.asl.ethz.ch/upl_pdf/97 -report.pdf [retrieved on 2015-08-25]
• ANGEL D SAPPA ET AL: "Road Approximation in Euclidean and v-Disparity Space: A Comparative Study", 12 February 2007 (2007-02-12), COMPUTER AIDED SYSTEMS THEORY - EUROCAST 2007; [LECTURE NOTES IN COMPUTER SCIENCE], SPRINGER BERLIN HEIDELBERG, BERLIN, HEIDELBERG, PAGE(S) 1105 - 1112, XP019081962, ISBN: 978-3-540-75866-2

EP 2 779 025 B1

- **MATHIAS PERROLLAZ ET AL: "Using the disparity space to compute occupancy grids from stereo-vision", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 2721-2726, XP031920169, DOI: 10.1109/IROS.2010.5649690 ISBN: 978-1-4244-6674-0**
- **SUGANUMA N ET AL: "Obstacle map generation using Virtual Disparity Image for non-flat road", SICE ANNUAL CONFERENCE, 2008, IEEE, PISCATAWAY, NJ, USA, 20 August 2008 (2008-08-20), pages 1920-1925, XP031351445, ISBN: 978-4-907764-30-2**
- **R. Turchetto ET AL: "Visual curb localization for autonomous navigation", Proceedings 2003 IEEE/RSJ International Conference on Intelligent Robots and Systems (IROS 2003) (Cat. No.03CH37453), vol. 2, 27 October 2003 (2003-10-27), pages 1336-1342, XP055208209, DOI: 10.1109/IROS.2003.1248830 ISBN: 978-0-78-037860-5**

**Description**

BACKGROUND OF THE INVENTION

**1. Field of the Invention**

The present invention relates to three-dimensional image processing, and specifically, a method and an apparatus for detecting a road edge.

**2. Description of the Related Art**

The driving assistance system is becoming more popular. The LDW/RDW (Lane/Road detection warning) system, a subsystem of the driving assistance system, can avoid collisions and help to determine driving directions accurately. Road detection is very important for the LDW/RDW system, because only by knowing road information can a further process such as a warning be performed. The road detection further includes road surface detection and road edge (or the road boundary) detection, etc.

Road edge detection can provide information to a driver, so that a departure from the road can be avoided. Furthermore, road edge detection and road surface detection may affect each other, and have a significant impact to road guardrail detection, vanishing point detection and vehicle recognition of the 3D driving environment recognition technology.

The stereo camera is widely used, because it has advantages of obtaining a disparity map and a distance image with high accuracy.

In U.S. patent application publication US2011063097, a road boundary detection device is disclosed. According to such device, supposing a road surface is known, the height of a road boundary of an existing first road area is detected, based on three-dimensional object information that is greater than a predetermined value; and it is judged whether a second road area of which the height of a road boundary cannot be detected is the same as the first road area; and it is determined that the second road area is the road boundary, if it is judged that the first and second road area are the same.

In U.S. patent application publication US2010017060, a method and a system for detecting a road boundary are disclosed. In such method, input range data is captured by using a light-based sensing system; the input range data is divided into an elevation signal and a signal projected onto the ground; the elevation signal is processed by filtering techniques to identify a road segment candidate region and by pattern recognition techniques to determine whether the candidate region is a road segment; and a line representation of the signal projected onto the ground is identified, and the line representation is compared to a simple road model in a top-down view to determine whether the candidate region is a road segment with its edges.

Zhencheng Hu et al: "U-V-disparity: an efficient algorithm for stereovision based scene analysis", Intelligent Vehicles Symposium, 2005. Proceedings. IEEE Las Vegas, NV, USA June 6-8, 2005, Piscataway, NJ, USA, IEEE, Piscataway, NJ, USA, 6 June 2005 (2005-06-06), pages 48-54, XP010833942, DOI: 10.1109/IVS.2005.1505076; ISBN: 978-0-7803-8961-8 discloses a method for detecting a road edge, the method comprising the steps of obtaining a disparity map with a road region and a corresponding V-disparity map; and extracting, from the V-disparity map, a road line Lv.

Florin Oniga et al: "Curb Detection Based on a Multi-Frame Persistence map for Urban Driving Scenarios", Intelligent Transportation Systems, 2008. ITSC 2008. 11th International IEEE Conference ON, IEEE, Piscataway, NJ, USA, 12 October 2008 (2008-10-12), pages 67-72, XP031383517, ISBN: 978-1-4244-2111-4 discloses extracting the dominant curb segment represented by the largest continuous interval of curb points.

SUMMARY OF THE INVENTION

Usually, in the prior art, the road edge detection is based on a accurately detected road surface; however, in a case of road surface detection, specifically, a case of a far distance, the detected road surface may be wrong, for example, an object on the outside of the road is often mistakenly detected as a road. Accordingly, when the road edge detection is performed based on a wrong road surface, the detected road edge may also be wrong.

It is one of objects of the present invention to provide a method and an apparatus for detecting a road edge. According to such method and apparatus, the robustness of the road edge can be improved, so that it is possible to detect the road edge accurately, even when there is not accurate road surface information.

The invention is in the method of Claim 1 and the apparatus of Claim 6.

## BRIEF DESCRIPTION OF THE DRAWINGS

FIG. 1 is a schematic drawing illustrating an in-car system that is an example of an application environment of the present invention, for understanding the present invention;

FIG. 2 is schematic drawing illustrating system operation in a case where a binocular camera is equipped on a car;

FIG. 3 is an overall flowchart of the method for detecting the road edge according to an embodiment of the present invention;

FIGs. 4(a) and 4(b) are schematic drawings illustrating a grayscale image captured by the in-car binocular camera and a corresponding disparity map according to an embodiment of the present invention;

FIG. 5(a) is a schematic drawing illustrating a V-disparity map according to an embodiment of the present invention, and FIG. 5(b) is a schematic drawing illustrating a segmentation road line segment extracted from the V-disparity map according to an embodiment of the present invention;

FIG. 6(a) is a schematic drawing illustrating a curve Lh in the V-disparity map that is higher than the extracted segmentation road line Lv, FIG. 6(b) is a schematic drawing illustrating a part in the disparity map that corresponds to the part below the curve Lh in the V-disparity map, and FIG. 6(c) is a schematic drawing illustrating a sub-U-disparity map;

FIG. 7 is a flowchart illustrating a method of self-adaptively extracting the road edge from the sub-U-disparity map;

FIG. 8(a) is a schematic drawing illustrating a road line Lv extracted from a V-disparity map according to an embodiment of the present invention, FIG. 8(b) is a schematic drawing illustrating short distance road points (reliable points) in a disparity map, FIG. 8(c) is a schematic drawing illustrating short distance road points (reliable points) in a grayscale image, FIG. 8(d) is a schematic drawing illustrating a projection of the reliable points in a U-disparity map, and FIG. 8(e) is a schematic drawing illustrating a part of the reliable points in a sub-U-disparity map;

FIG. 9(a) is a schematic drawing illustrating reliable road points in a U-disparity map, and FIG. 9(b) is a schematic drawing illustrating a first road edge line extracted from a sub-U-disparity map according to an embodiment;

FIG. 10 is a flowchart of a method for extracting a road edge line segment continuing the previously extracted road edge line segment according to an embodiment of the present invention;

FIG. 11 is a schematic drawing illustrating a first road edge line segment;

FIG. 12 is a schematic drawing illustrating an obtained region of interest (ROI) for extracting the next road edge;

FIG. 13(a) is a schematic drawing illustrating reliable points (in a U-disparity map) for extracting the next road edge line segment, and FIG. 13(b) is a schematic drawing illustrating the next road edge line segment extracted from a sub-U-disparity map based on the reliable points;

FIG. 14 is a schematic drawing illustrating an extracted road edge in a grayscale image;

FIG. 15 is a block diagram illustrating an apparatus for detecting a road edge 4000 according to an embodiment of the present invention; and

FIG. 16 is an overall hardware block diagram illustrating a system for detecting a road edge 6000 according to the embodiment of the present invention.

## DETAILED DESCRIPTION OF THE PREFERRED EMBODIMENTS

In the following, embodiments of the present invention are described with reference to the accompanying drawings, so as to facilitate the understanding of the present invention.

The embodiments of the present invention will be described in the following order:

1. Introduction of Essential Concepts
2. Application Environment and Operation in In-car Environment
3. Embodiment of Road Edge Detection Method
4. Example of Method for Self-adaptively Extracting Road Edge from Sub-U-disparity Map
5. Extraction of Road Edge From Disparity Map Based On Road Edge Extracted from Sub-U-disparity Map
6. Road Edge Detection Apparatus
7. System Hardware Configuration
8. Summary

<1. Introduction of Essential Concepts>

The essential concepts relating to the present specification will be introduced as follows, so as to facilitate the understanding of the present invention.

"Disparity" indicates an angle made by two straight lines that are drawn from opposite ends of a base line to a distant object. In general, it means a direction difference generated by looking at the same object from two points having a certain separation distance. The angle that is generated by looking at the two points from the object is called a "disparity angle" of the two points, and the distance between the two points is called a "base line". A distance between the object and an observer can be calculated as long as the disparity angle and length of the base line are known.

A "disparity map" is an image that is based on a reference image, the size of the disparity, and the size of the reference image; and an element value of the disparity map is a disparity value. The disparity map includes distance information of a scene. The disparity map may be calculated from left and right images picked up by a binocular camera or calculated from a depth map of a stereogram.

The coordinates of a point of a common disparity map are represented as (u,v,d), where u is an abscissa and v is an ordinate; d is the disparity of the point (u,v).

The "V-disparity map" may be regarded as a side view of the disparity map, and the "U-disparity map" may be regarded as a top view of the disparity map, so as to facilitate understanding. A V-disparity map may be calculated from the disparity map. The grayscale value of any point (d,v) of a V-disparity map is the number of points of the corresponding disparity map where the ordinate is v and the disparity value is equal to d. V in a V-disparity map corresponds to ordinate v in a (u,v) image coordinate system. A point (u,v,d) in a disparity map is projected to point (v,d) in a V-disparity map. Similarly, a U-disparity map may be calculated from the disparity map. The grayscale value of any point (u,d) of a U-disparity map is the number of points of the corresponding disparity map where the abscissa is u and the disparity value is equal to d. U in a U-disparity map corresponds to ordinate u in a (u,v) image coordinate system. A point (u,v,d) in a disparity map is projected to point (u,d) in a U-disparity map.

In the present specification, an image consisting of points for extracting a road edge in a U-disparity map is called a "sub-U-disparity map".

The disparity map, the V-disparity map, the U-disparity map and its applications in the road detection may refer to the Chinese patent application by the inventor YouGanmei, et al., for which the application No. is CN201110434873.X and the Chinese patent application by the inventor ChenChao, et al., for which the application No. is CN201210513215.4.

<2. Application Environment and Operation in In-car Environment>

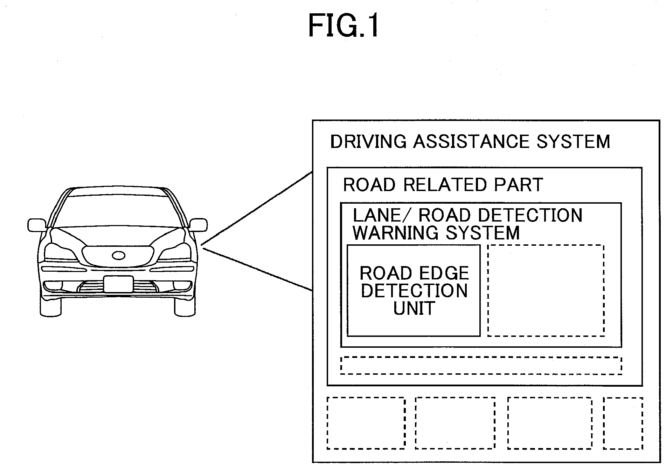

FIG. 1 is a schematic drawing illustrating an in-car system that is an example of an application environment of the present invention, for understanding the present invention. The software or hardware implementation of the present invention may be used as a road edge detection unit of such system.

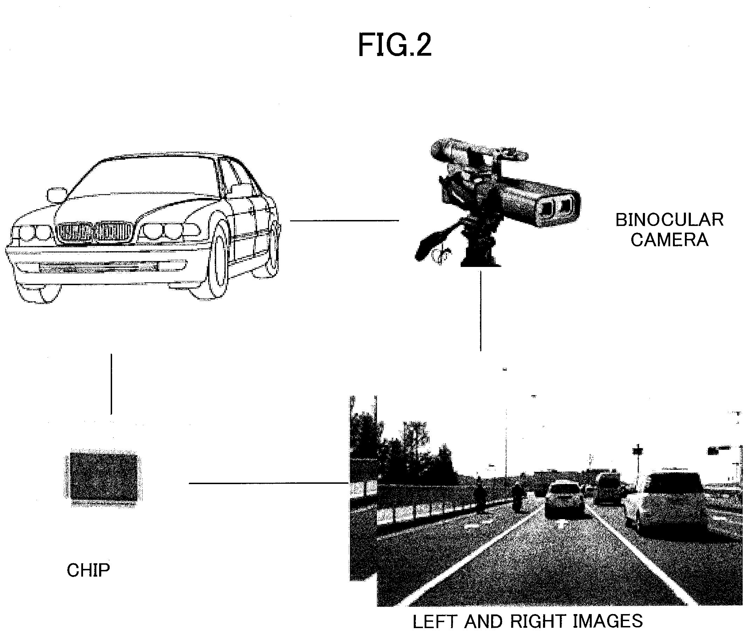

FIG. 2 is schematic drawing illustrating system operation in a case where a binocular camera is equipped on a car.

In a car equipped with a binocular camera, the binocular camera captures left and right images, the left and right images are stored in a memory of the system, a chip processes the left and right images to obtain a disparity map, a V-disparity map and a U-disparity map, etc., and can then perform a road edge detection.

<3. Embodiment of Road Edge Detection Method>

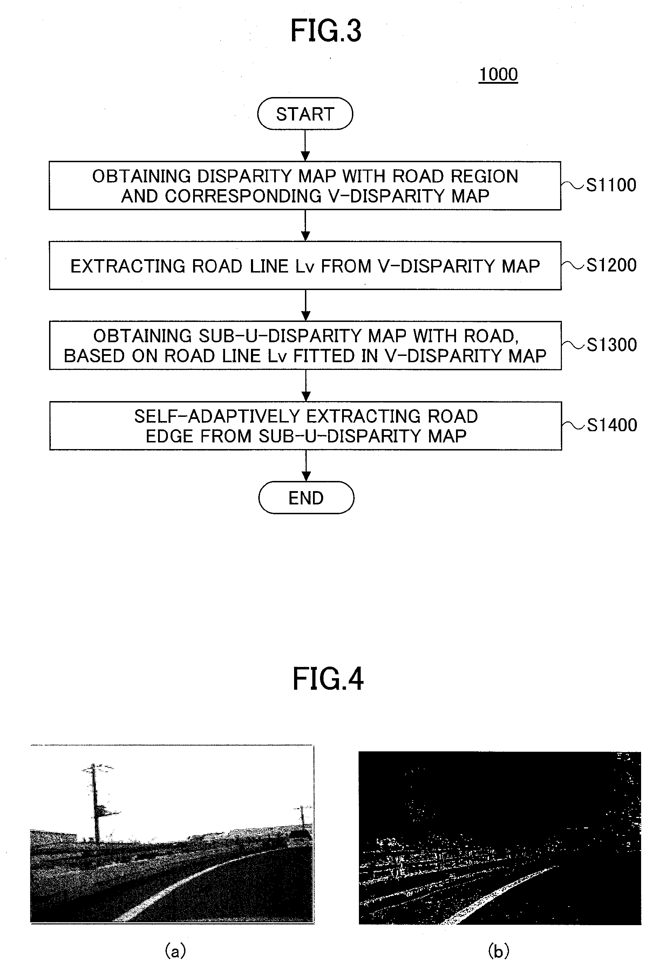

FIG. 3 is an overall flowchart of the method for detecting the road edge 1000 according to an embodiment of the present invention.

In step S1100, a disparity map with a road region and a corresponding V-disparity map are obtained.

The disparity map with the road region may be obtained by a binocular camera, a multi-camera or a stereo camera by calculating, and the V-disparity map may be converted from the disparity map. The binocular camera, the multi-camera or the stereo camera may be mounted to the front part of a vehicle as illustrated in FIG. 1 or FIG. 2. Alternatively, the disparity map may be obtained from a depth map that is obtained from a stereo image. After the disparity is obtained, the corresponding V-disparity map is obtained by converting the disparity map.

As described above, after the disparity map is obtained, the V-disparity map is obtained from the disparity map. However, it is just an example, and the V-disparity map may also be obtained directly by processing or calculating an image, such as the image obtained by the binocular camera.

The disparity map and the projection of the disparity map onto the V-disparity map (and the U-disparity map) may refer to a non-patent literature of 3DIM 2005: 204-211 by the authors of Zhencheng Hu, Francisco Lamosa and Keiichu Uchimura, for which the title is "A Complete U-V-Disparity Study for Stereovision Based 3D Driving Environment Analysis".

FIGs. 4(a) and 4(b) are schematic drawings illustrating a grayscale image captured by the in-car binocular camera and a corresponding disparity map according to an embodiment of the present invention.

Additionally, in an embodiment, a noise reduction may be performed for the disparity map or the V-disparity map.

In step S1200, a road line Lv is extracted from the V-disparity map.

As disclosed in the Chinese patent application by the inventor YouGanmei, et al., for which the application No.

is CN201110434873.X, a flat road is represented as a slant line segment in the V-disparity map, a non-flat road may be regarded as a road consisting of a plurality of flat roads, and the flat roads are represented as slant line segments with different slopes in the V-disparity map.

The method for extracting a line segment from the V-disparity map may use, for example, a Hough transform or a least squares method.

The road line Lv in the disparity map may be represented as y=c1*d+c2, where (y,d) is the coordinate of a point on the extracted straight road line Lv, y is the coordinate of a point on a vertical axis in the V-disparity map, D is the disparity, c1 is the slope of the straight line, and c2 is the intercept on the vertical axis (i.e., the ordinate when the disparity is equal to zero). In a case where a non-flat road is fitted from a plurality of slant line segments with different slopes, the parameters c1 and c2 of the slant line segments may be different.

According to an embodiment, the step of extracting segments from the V-disparity map as the road may include: extracting segmentation line segments from the V-disparity map as the road in an order of the disparity from large to small, i.e., an order of a distance (from the camera mounted on the vehicle) from near to far, the segmentation line segments obtained by performing an estimation based on a limited Hough transform; and limiting an initial straight line parameter of a subsequent line segment based on an estimated straight line parameter of a previous line segment. the method for simulating the road based on the segmentation line segments extracted from the V-disparity map may refer to the contents of the Chinese patent application by the inventor YouGanmei, et al., for which the application No. is CN201110434873.X. It may also refer to an article of IROS 2009: 4584-4589 by the authors Jun Zhao, Mark Albert Whitty, and Jayantha Katupitiya, for which the title is "Detection of Non-Flat Ground Surfaces Using V-Disparity Images".

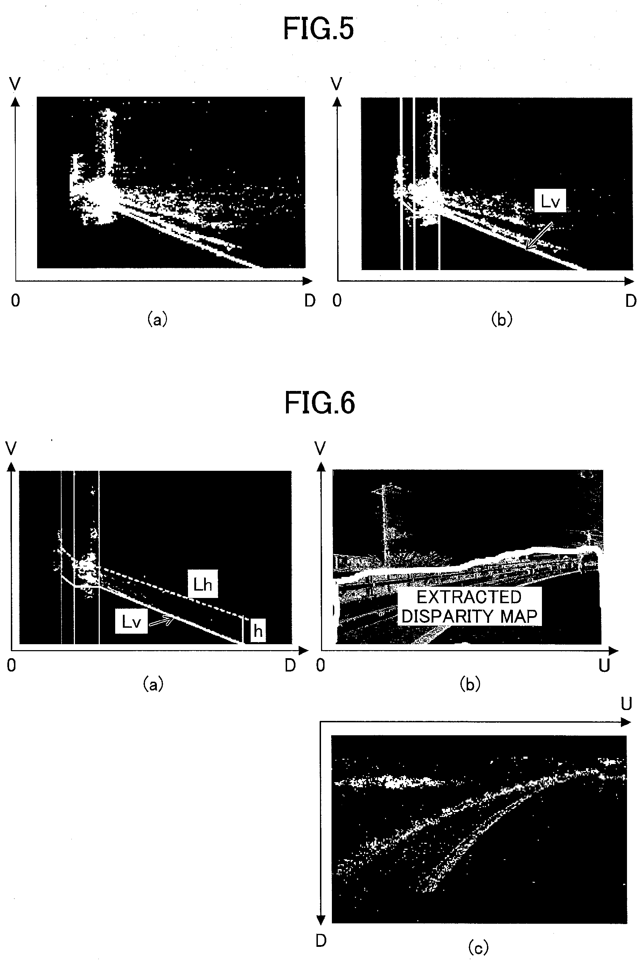

FIG. 5(a) is a schematic drawing illustrating a V-disparity map according to an embodiment of the present invention, a V axis and a D axis are illustrated and the form of the V-D coordinates system is also used in the following V-disparity maps; and FIG. 5(b) is a schematic drawing illustrating a segmentation road line segment extracted from the V-disparity map according to an embodiment of the present invention, a road represented by the leftmost line segment is located closest to the camera, a road represented by the rightmost line segment is located farthest away from the camera, and vertical lines in FIG. 5(b) represents the boundaries of the roads.

After the road line Lv is extracted in step S1200, the process proceeds to step S1300.

In step S1300, a sub-U-disparity map with the road is obtained based on the road line Lv extracted from the V-disparity map.

As described above, the U-disparity map may be regarded as a top view of the disparity map. The sub-U-disparity map here relates to a part of a top view of the disparity map or a top view of a part of the disparity map, more specifically, a part relating to the road; therefore, it is called the "sub-U-disparity map".

In an embodiment, in order to obtain the sub-U-disparity map, a part relating to the road may first be selected from the disparity map; and then, a sub-U-disparity map is created by using the part selected from the disparity map, and the sub-U-disparity map will be used to extract the road edge.

Preferably, when the part relating to the road is selected from the disparity map, it is desired that the part can cover all of the points that may become the road. In an embodiment, points of distances between the points and the road surface extracted in step S1200 which are less than a predetermined height threshold h, are selected from the disparity map, the predetermined height threshold should be large enough to include road points even though the road points are located in a non-flat road surface, and the predetermined height threshold may be set as 2m in an example. In an embodiment, in order to select the road points, a curve Lh of which a vertical distance between the curve Lh and the road line Lv (extracted in above step S1200) is the predetermined height threshold h, is first obtained from the V-disparity map. There is a conversion relationship between a height in a real three-dimensional world h and the number of pixels in the V-disparity map. Specifically, for each of disparity values d, a real height corresponding to a pixel $h_{pixel}$ may be determined based on a distance between two cameras for picking up the disparity map $Dist_{Camera}$, according to the following equation (1).

$$h_{pixel}=Dist_{Camera}/d \qquad (1)$$

For each of disparity d, a vertical distance from the disparity d to the road line Lv in the V-disparity map k, may be determined based on a height from the road surface in real three-dimensional world h, according to the following equation (2).

$$k=h/h_{pixel} \qquad (2)$$

In this way, a curve Lh illustrated in FIG. 6(a) can be obtained, where a distance in the vertical direction between Lh and Lv corresponds to the height in the real three-dimensional world h.

After the curve Lh is obtained from the V-disparity map, all of the points below the curve Lh in the V-disparity map are returned back to the disparity; so that all of the points with a height from the road surface in the disparity map, i.e., all of the points that are projected to points below Lh in the V-disparity map. Accordingly, a selected part can be obtained from the disparity map, as illustrated in FIG. 6(b).

After the selected part is obtained from the disparity map, a sub-U-disparity map, i.e., a top view of the selected part of the disparity map can be obtained, as illustrated in FIG. 6(c).

In other word, in an embodiment, the step of obtaining the sub-U-disparity map with the road based on the road line Lv extracted from the V-disparity map includes: extracting points that satisfy $y < c_1*d + c_2 + H$ from the V-disparity map, where H is a positive value corresponding to a predetermined vertical height above the ground in the three-dimensional real world; obtaining, from the disparity map, points corresponding to the points extracted from the V-disparity map; and projecting the points obtained from the disparity map to the U-disparity map so as to obtain the sub-U-disparity map.

In another embodiment, it may also be configured to return only the points that fit the road line Lv in the V-disparity map to the disparity map, and project onto the U-disparity map to obtain the sub-U-disparity map. It may be applied to a case of a perfect road disparity map, i.e., a case where most of the points on the road have an accurate disparity value.

In another embodiment, all of the points in the three-dimensional world that is located in a predetermined range above or below the road line Lv which are fit into the V-disparity map, may be regarded as points to be projected into the sub-U-disparity map. Specifically, in this example, for example, two curves above and below the road line Lv in a predetermined vertical distance may be obtained from the V-disparity map, all of the points between the two curves are returned back to the disparity map, and the points that are returned back to the disparity map are projected into the top view to obtain the sub-U-disparity map.

In another embodiment, if some information relating to the road surface, such as flatness of the road or slope of the road is known in advance, or the accuracy of the road line Lv extracted from the V-disparity map can be evaluated by some other methods, such road information and/or road line evaluation accuracy information may be considered to determine a range for selecting the road points from the disparity map, in the operation of extracting the road line Lv from the V-disparity map and obtaining the sub-U-disparity map with the road from the disparity map.

The example of extracting the road line Lv from the V-disparity map and obtaining the sub-U-disparity map with the road, is described above.

After the sub-U-disparity map with the road is obtained in step S1300, the process proceeds to step S1400.

In step S1400, the road edge is self-adaptively extracted from the sub-U-disparity map.

In general, the road edge may be represented as a line segment or a plurality of line segments, according to flatness or curves of the road surface.

The "self-adaptively" here doses not mean that the number of the line segments of the road edge and the form of the line segments are defined artificially, but means that the road edge extraction is adaptively and automatically performed based on characteristics of continuity and gradual change of the road edge and a characteristics that the road edge is located on the outside of the road.

In an embodiment, the step of self-adaptively extracting the road edge from the sub-U-disparity map may include: extracting, based on the road line Lv extracted from the V-disparity map, points that satisfy a predetermined condition from the sub-U-disparity map as reliable road points; and extracting, based on the reliable road points, road edge line segments that satisfy a predetermined road edge condition from the sub-U-disparity map.

In an embodiment, the predetermined road edge condition may include that (a) the road edge line segment is located at an outermost edge of the road, (b) the length of the road edge line segment in the three-dimensional real world is greater than a predetermined length threshold, and (c) a point density of the road edge line segment is greater than a predetermined density threshold.

In an embodiment, if a road edge line segment is extracted, an end point of an extracted road edge line segment is calculated, a region of interest for extracting the next road edge line segment is determined based on characteristics of continuity and gradual change of the road, and the next road edge line segment with a start point that is the calculated end point, is extracted from the region of interest; and the process of extracting the road edge line segment is repeated, until no road edge line segment can be extracted.

In an embodiment, the step of extracting the points that satisfy the predetermined condition from the sub-U-disparity map as the reliable road points based on the road line Lv extracted from the V-disparity map, may include: obtaining, from the extracted road line Lv, road line segments with a distance relating to the disparity that is less than a predetermined value; extracting, from the disparity map, points that are projected above or below the road line Lv in the V-disparity map; and projecting the points extracted from the disparity map to the U-disparity map as reliable road points.

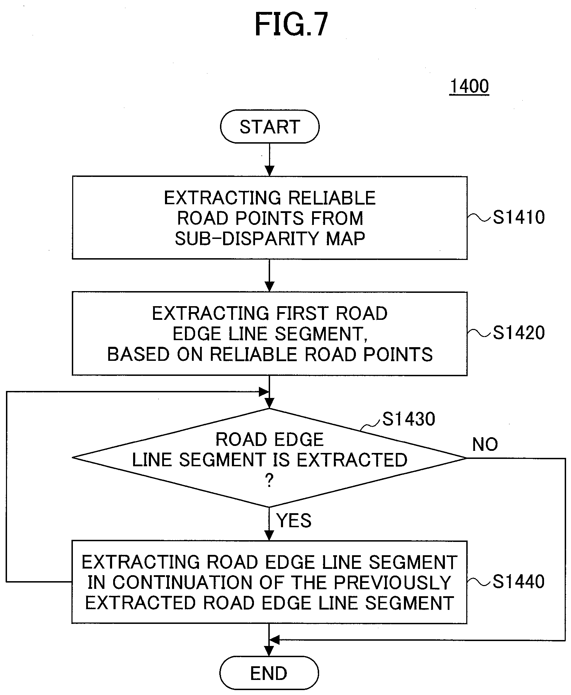

Next, an example of self-adaptively extracting the road edge from the sub-U-disparity map will be described with reference to FIG. 7.

According to the road edge detection method according to the above embodiment of the present invention, it is possible to detect the road edge accurately, even when there is not accurate road surface information.

<4. Example of Method for Self-adaptively Extracting Road Edge from Sub-U-disparity Map>

In the following, an example of the method of self-adaptively extracting the road edge from the sub-U-disparity map according to an embodiment of the present invention will be described with reference to FIG. 7.

FIG. 7 is a flowchart illustrating a method of self-adaptively extracting the road edge from the sub-U-disparity map 1400. The method 1400 may be applied to step S1400 illustrated in FIG. 3.

As illustrated in FIG.7, in step S1410, reliable road points are extracted from the sub-U-disparity map.

In an example, points that satisfy a predetermined condition are extracted, based on the road line Lv fitted in the V-disparity map, from the sub-U-disparity map as reliable road points.

For example, points that are projected below the line Lv in the V-disparity map and with a distance (i.e., a distance from the camera for picking up the disparity map) in the real three-dimensional world less than a predetermined distance threshold, may be regarded as reliable road points. In general, detection of a short distance is relatively accurate, and a short portion of the road line Lv is relatively accurate; therefore, road points obtained based on the relatively accurate portion is relatively reliable, a relatively reliable road edge can be extracted based on the reliable road points.

Specifically, in the disparity map, for each of points p(u',v',d'), if a value on the V coordinate axis v' satisfies a first condition represented in the following equation (3),

$$V' \leq a*d' + b \qquad (3)$$

i.e., the points are located below a road line $Lv(v=a*d+b)$ in the V-disparity map, and the points satisfy a second condition, i.e., a real distance from the camera $Dist_p$ is less than a predetermined distance threshold $Dist_{thres}$, as represented in the following equation (4),

$$Dist_p \leq Dist_{thres} \qquad (4)$$

such points are regarded as the reliable road points.

The real distance from the camera $Dist_p$ may be derived from a distance between the cameras $Dist_{Camera}$, the focal length of the camera F and the disparity value of the point d', as represented in the following equation (5).

$$Dist_p = Dist_{Camera} * F / d' \qquad (5)$$

In an example, the predetermined distance threshold is 10m, because a measurement error of the binocular camera in such a distance is small. However, the distance threshold may be selected appropriately according to the performance and the actual application of the camera.

After the reliable points are found from the disparity map, such reliable points p(u',v',d') are projected into the U-disparity map, and the points projected into the U-disparity map are (u',d') and such points may also be highlighted in the sub-U-disparity map. In this way, the reliable road points are obtained in the sub-U-disparity map.

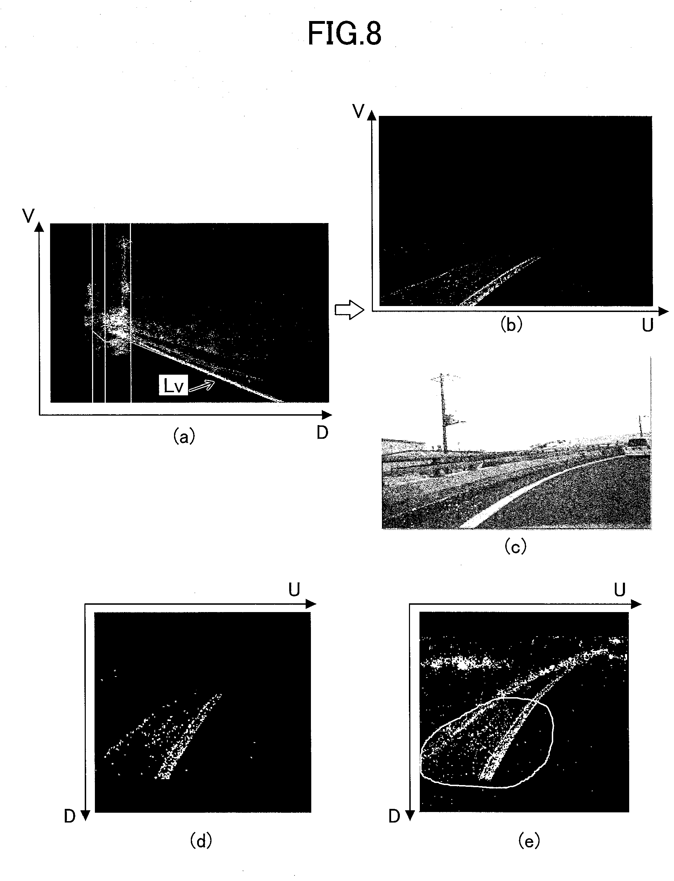

FIG. 8(a) is a schematic drawing illustrating the road line Lv extracted from the V-disparity map according to an embodiment, FIG. 8(b) is a schematic drawing illustrating short distance road points (the reliable points) in the disparity map, FIG. 8(c) is a schematic drawing illustrating the short distance road points (the reliable points) in the grayscale image, FIG. 8(d) is a schematic drawing illustrating a projection of the reliable points in the U-disparity map, and FIG. 8(e) is a schematic drawing illustrating the part of the reliable points in the sub-U-disparity map, which is illustrated by a circled area.

Returning to FIG. 7, after the reliable road point are extracted from the sub-U-disparity map, the process proceeds to step S1420.

In step S1420, road edge line segments that satisfy a predetermined road edge condition are extracted based on the reliable road points from the sub-U-disparity map.

In an example, a straight line fitting is performed by a Hough transform for the reliable road points in the U-disparity map, and line segments that satisfy a predetermined road edge condition are selected as road edge line segments.

In an example, the road edge condition may include the following items.

(1) the line segment is located at the outermost edge of the road

Specifically, as an example of the extraction of a left edge of the road, a line segment corresponding to the leftmost edge of the road is located at the upper left corner of the sub-U-disparity map. Therefore, a line segment of which the sum of the absolute value of a horizontal intercept (which is determined by the intersection between a straight line corresponding to such a line segment and the horizontal axis (u",0)) and the absolute value of a vertical intercept (which is determined by the intersection between a straight line corresponding to such a line segment and the vertical axis (O,d")) is a minimum value (min(|u"|+|d″|)), may be found from all of the line segments.

(2) a real length of the line segment is greater than a predetermined length threshold

The real length of the line segment here means a real length corresponding to the line segment in the real three-dimensional world coordinate system. A real length in the real three-dimensional world corresponding to a line segment in the sub-U-disparity map may be obtained by converting parameters of the camera, for example, be obtained from the equation (6).

$$\mathrm{Length=Dist_{Camera}*F/d2-Dist_{Camera}*F/d1} \qquad (6)$$

Where Length is the length of the line segment, $\mathrm{Dist_{Camera}}$ is the distance between two cameras, for example in a case of a binocular camera, d1 and d2 are disparity values of two end points of the line segment, and d2<d1.
In reality, the road is continuous, therefore the length of the road should not be too short.
Therefore, non-road line segments can be removed by setting the predetermined length threshold. For example, the length threshold may be set as 9m.

(3) a point density of the line segment is greater than a predetermined density threshold

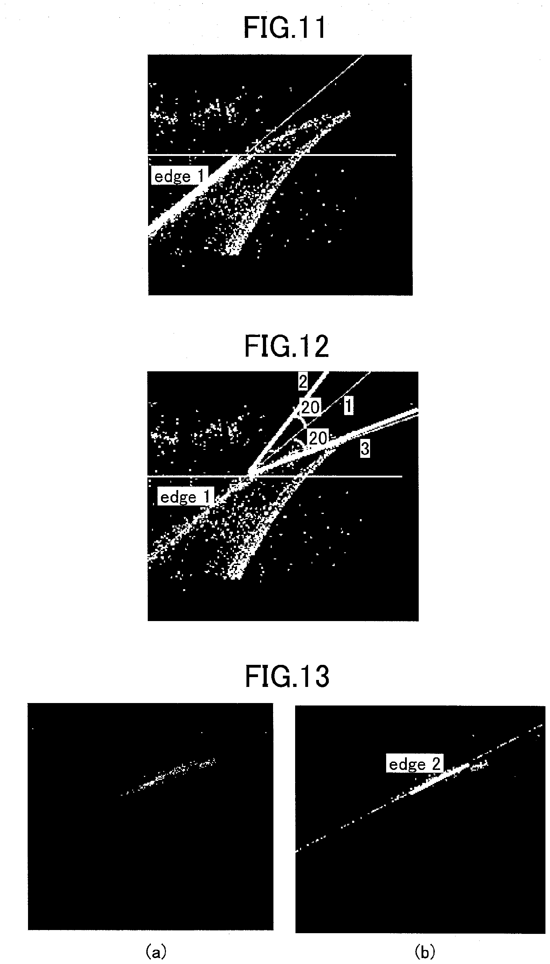

The point density of the line segment may be determined by dividing the number of the reliable points on the line segment by the length of the line segment. In general, the larger the point density is, the more reliable the fitted line segment is.
The above road edge conditions are just examples, and the road edge condition may be added, deleted or modified as necessary.
In this way, in step S1420, a first road edge line can be extracted based on the reliable road points.

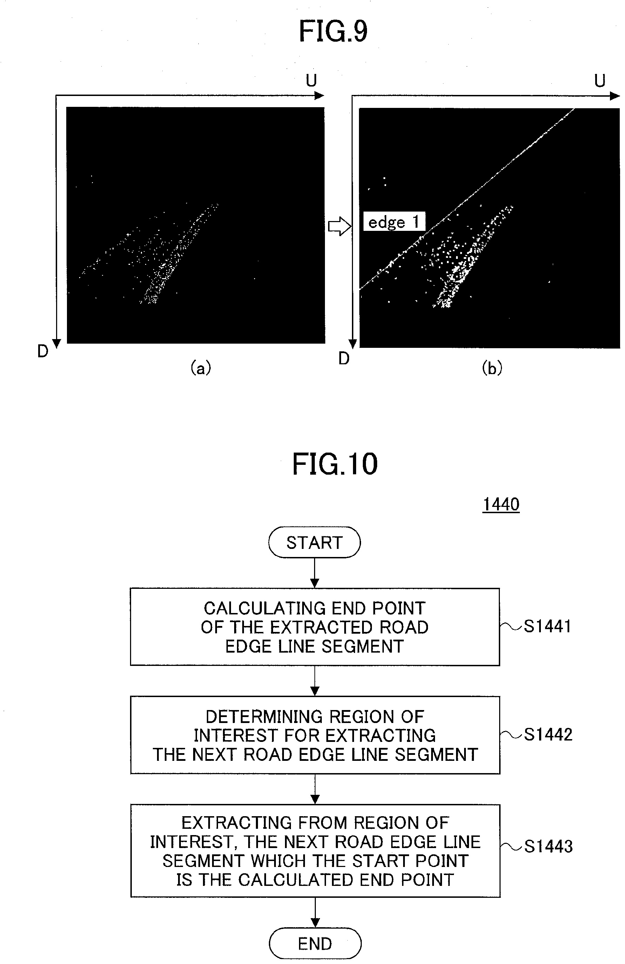

FIG. 9(a) is a schematic drawing illustrating the reliable road points in the U-disparity map, and FIG. 9(b) is a schematic drawing illustrating the first road edge line extracted from the sub-U-disparity map according to an embodiment.
After step S1420, the process proceeds to step S1430.
In step S1430, it is determined whether a road edge line segment that satisfies the road edge condition is extracted or not.
If the determination result in step S1430 is NO, that is, a road edge line segment that satisfies the road edge condition is not extracted, the process ends.
On the other hand, if the determination result in step S1430 is YES, that is, a road edge line segment that satisfies the road edge condition is extracted, the process proceeds to step S1440.
In step S1440, a road edge line segment in continuation of the previously extracted road edge line segment is extracted.
Next, a method for extracting a road edge line segment in continuation of the previously extracted road edge line segment according to an embodiment of the present invention will be described with reference to FIG. 10.
FIG. 10 is a flowchart of a method for extracting a road edge line segment in continuation of the previously extracted road edge line segment 1440 according to an embodiment of the present invention. the method 1440 may be applied to step S1440 illustrated in FIG. 7.
As illustrated in FIG. 10, in step S1441, an end point of the above extracted road edge line segment (the first road edge line segment when the above road edge line segment is the first road edge line segment) is calculated. In this example, the end point is the end point on the far distance side of the road edge line segment.
In an example, such an end point is set as the reliable point with the farthest distance (i.e., the smallest disparity) on the first road edge line segment. The end point of the first road edge line segment may also be determined by any other methods as necessary.
The first road edge is determined, when the end point of the first road edge line segment is determined. FIG. 11 is a schematic drawing illustrating the first road edge line segment, illustrated as a bold line segment below a horizontal line marked "edge 1".
After the end point of the previously extracted road edge line segment in step S1441 is determined, the process proceeds to step S1442.
In step S1442, a region of interest for extracting the next road edge line segment is determined.

The region of interest (ROI) for extracting the next road edge line segment is determined; therefore, the processing range can be reduced, and the processing efficiency and the accuracy of the road edge extraction can be improved.

In an example, since the road is continuous, the inclination angle of the road gradually changes. Therefore, an angle change range is set based on the angle of the previous road edge line segment, and a region in the angle change range may be regarded as the region of interest (ROI) for extracting the next road edge line segment. In an example, the angle change range is set to 20 degrees. However, this angle change range is just an example and may be modified as necessary.

FIG. 12 is a schematic drawing illustrating the obtained region of interest (ROI), the straight line shown by symbol 1 is a straight line extended from the first road edge line segment; and the straight lines shown by symbols 2 and 3 may be obtained by rotating the line upwards and downwards 20 degrees around the previously determined end point from the first road edge line segment 1, and be used as two boundary lines of the region of interest (ROI). The region between the boundary lines 2 and 3 is the region of interest (ROI) for extracting the next road edge line segment. That is, points within the region of interest (ROI) may be regarded as the reliable points for extracting the next road edge line segment.

After the region of interest (ROI) is determined in step S1442, the process proceeds to step S1443.

In step S1443, the next road edge line segment with a start point that is the calculated end point is extracted from the region of interest.

In an example, the method for extracting the road edge line segment may be similar to the method for extracting the first road edge line segment described in step S1420 of FIG. 7. That is, points in the region of interest (ROI) may be fitted by a Hough transform, and a line segment that satisfies a predetermined road edge condition may be selected as a road edge line segment in the region of interest (ROI). The road edge condition here may be the same as or different from the road edge condition used in the above extraction method for the first road edge line segment.

FIG. 13(a) is a schematic drawing illustrating reliable points (in a U-disparity map) for extracting the next road edge line segment, and FIG. 13(b) is a schematic drawing illustrating the next road edge line segment extracted from a sub-U-disparity map based on the reliable points, namely, the second road edge line segment edge 2.

The method for extracting a road edge line segment in continuation of the previously extracted road edge line segment S1440 used in the extraction of FIG. 7 is described above with reference to FIGs. 10 to 13.

Returning to FIG. 7, after the road edge line segment in continuation of the previously extracted road edge line segment is extracted in step S1440, the process returns back to step S1430, namely, it is subsequently determined whether a road edge line segment that satisfies the road edge condition is extracted or not, a extraction of the next road edge line segment is repeated if it is extracted, and the process ends if a reasonable road edge line segment is not extracted.

As described above, the method for self-adaptively extracting the road edge from the sub-disparity map is provided. According to the method for self-adaptively extracting the road edge, the road edge extraction can be performed for either a flat road or a non-flat inclined road, and it is possible to detect the road edge accurately, even when there is not accurate road surface information.

<5. Extraction of Road Edge From Disparity Map Based On Road Edge Extracted from Sub-U-disparity Map>

In an example, the road edge is extracted from the disparity map, based on the road edge extracted from the sub-U-disparity map.

For example, the extraction of the road edge from the disparity map based on the road edge extracted from the sub-U-disparity map may be implemented as follows.

Points of which (a) horizontal distances between points projected in the U-disparity map and the road edge in the U-disparity map are less than a first predetermined distance and (b) vertical distances between points projected in the V-disparity map and the road edge in the V-disparity map are less than a second predetermined distance, are extracted from the disparity map as points on the road edge.

The above first and second predetermined distances are very small values, so that the extracted points are reliably located on or around the road edge.

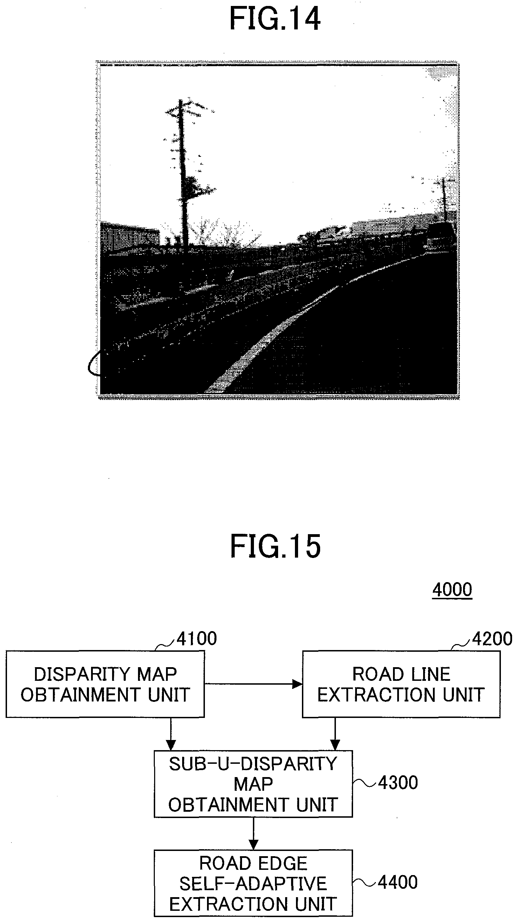

FIG. 14 is a schematic drawing illustrating the extracted road edge in a grayscale image, and points surrounded by an elliptic circle are the points of the road edge.

In another embodiment, after the road edge is extracted from the disparity map, the road surface detection may be further refined. Specifically, points on the outside of the road edge in the V-disparity map are excluded from road candidate points based on the road edge extracted from the disparity map, and road detection is performed based on the road candidate points after the exclusion.

<6. Road Edge Detection Apparatus>

FIG. 15 is a block diagram illustrating an apparatus for detecting a road edge 4000 according to an embodiment of the present invention.

As illustrated in FIG. 15, the apparatus for detecting a road edge may include: a disparity map obtainment unit 4100 configured to obtain a disparity map with a road region and a corresponding V-disparity map; a road line extraction unit 4200 configured to extract, from the V-disparity map, a road line Lv; a sub-U-disparity map obtainment unit 4300 configured to obtain, based on the road line Lv extracted from the V-disparity map, a sub-U-disparity map with the road; and a road edge self-adaptive extraction unit 4400 configured to self-adaptively extract, from the sub-U-disparity map, the road edge.

In an example, the road edge self-adaptive extraction unit 4400 includes: a reliable road point extraction unit configured to extract, based on the road line Lv extracted from the V-disparity map, points that satisfy a predetermined condition from the sub-U-disparity map as reliable road points; and a road edge line segment extraction unit configured to extract, based on the reliable road points, road edge line segments that satisfy a predetermined road edge condition from the sub-U-disparity map.

In an example, the predetermined road edge condition comprises that (a) the road edge line segment is located at an outermost edge of the road, (b) the length of the road edge line segment in the three-dimensional real world is greater than a predetermined length threshold, and (c) a point density of the road edge line segment is greater than a predetermined density threshold.

In an example, the road edge line segment extraction unit 4400 calculates an end point of an extracted road edge line segment, determine a region of interest for extracting the next road edge line segment based on a characteristics of continuity and gradual change of the road, and extract the next road edge line segment with a start point that is the calculated end point from the region of interest, when a road edge line segment is extracted; and repeat the process of extracting the road edge line segment, until no road edge line segment can be extracted.

In an example, the reliable road point extraction unit may obtain, from the extracted road line Lv, road line segments with a distance relating to the disparity that is less than a predetermined value; extract, from the disparity map, points that are projected above or below the road line Lv in the V-disparity map; and project the points extracted from the disparity map to the U-disparity map as the reliable road points.

In an example, the sub-U-disparity map obtainment unit 4300 may extract points that satisfy $y < c_1*d + c_2 + H$ from the V-disparity map, where H is a positive value corresponding to a predetermined vertical height above the ground in the three-dimensional real world; obtain, from the disparity map, points corresponding to the points extracted from the V-disparity map; and project the points obtained from the disparity map onto the U-disparity map so as to obtain the sub-U-disparity map.

In an example, the road edge detection apparatus 4000 includes a road edge extraction unit configured to extract the road edge from the disparity map, based on the road edge extracted from the sub-U-disparity map. In an example, the road edge extraction unit may extract points of which (a) horizontal distances between points projected in the U-disparity map and the road edge in the U-disparity map are less than a first predetermined distance and (b) vertical distances between points projected in the V-disparity map and the road edge in the V-disparity map are less than a second predetermined distance, from the disparity map as points on the road edge.

In an example, the road edge detection apparatus 4000 may include a road surface refinement unit configured to exclude points on the outside of the road edge in the V-disparity map from road candidate points based on the road edge extracted from the disparity map; and perform a road detection based on the road candidate points after the exclusion.

The specific function and implementation of the road edge detection apparatus may refer to the description relating to FIG. 3.

According to the road edge detection apparatus according to the embodiment of the present invention, it is possible to detect the road edge accurately, even when there is not accurate road surface information.

<7. System Hardware Configuration>

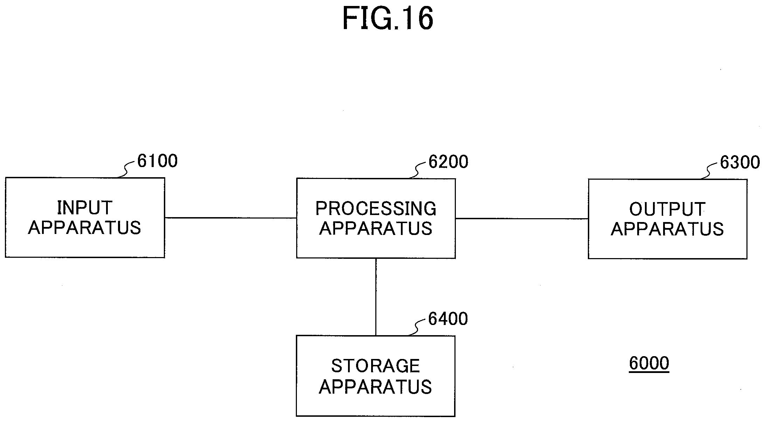

The present invention may also be implemented as a road edge detection system. FIG. 16 is an overall hardware block diagram illustrating a system for detecting a road edge 6000 according to the embodiment of the present invention. As illustrated in FIG. 16, the road edge detection system 6000 may include an input apparatus 6100 for inputting relevant images or information such as left and right images picked up by a stereoscopic camera, for example, including a keyboard, a mouse, and a communication network and a input device connected thereto, etc.; a processing apparatus 6200 for implementing the above method for detecting the road edge according to the embodiment of the present invention or being implemented as the above apparatus for detecting the road edge according to the embodiment of the present invention, such as a CPU of a computer or other chips having processing ability, etc., that can be connected to a network (not shown) such as the Internet and transmit a processed image to a remote apparatus based on the requirements of processing procedures; an output apparatus 6300 for outputting the result obtained by implementing the road edge detection process to the outside, such as a screen, a printer, a communication network and a remote output device connected thereto, etc.; and a storage apparatus 6400 for storing the V-disparity map, the sub-U-disparity map, the road lines, and the road edge line segments relating to the above detection process of the road edge, etc., by a volatile method or a nonvolatile method, such as various kinds of volatile or nonvolatile memory including a random-access memory (RAM), a read-only memory (ROM), a hard disk and a semiconductor memory.

<8. Summary>

The method and the apparatus for detecting the road edge according to the embodiment of the present invention are as described in the appended claims.

The above description of the embodiments is just for describing the present invention, and various modifications and replacements may be made by persons skilled in the art within the scope of the appended claims.

For example, as described above, the U-disparity map and the V-disparity map are obtained by calculating from the disparity map. However, it will be apparent that the U-disparity map and the V-disparity map may be obtained by picking up left and right images by a special camera such as a binocular camera, a multi-camera, a stereoscopic camera and calculating directly, or by calculating from a depth map of a stereogram.

Furthermore, in the above embodiments, the vehicle travels forward, and the binocular camera picks up a scene in front of the vehicle. However, the present invention may also be applied to the reverse direction, the binocular camera picks up a scene behind the vehicle, and road surface behind the vehicle is detected.

The basic principle of the present invention is described above with reference to the embodiments. Any one or all of the steps or units of the method or apparatus according to the present invention may be implemented by hardware, software or combination thereof in any one of computing devices (including a processor, a storage medium, etc.) or a network of computing devices, and it can be implemented by persons skilled in the art who have read the specification of the present application.

Therefore, the present invention can also be realized by a program or a set of programs running on any one of computing devices. The computing devices may be well known general-purpose devices. Therefore, the present invention may also be implemented by providing a program product including program codes for implementing the method or apparatus. That is to say, the program product also belongs to the present invention, and a storage medium storing the program product also belongs to the present invention. Obviously, the storage medium may be any one of well known storage media or storage media which are to be developed.

In addition, in the apparatus or method of the present invention, units or steps may be divided and/or recombined. The division and/or recombination should be regarded as a possible example of the present invention. Steps of the above method may be performed in time order, however the performed sequence is not limited to the time order. Any steps may be performed in parallel or independently.

**Claims**

1.   A method for detecting a road edge, the method comprising the steps of:

   obtaining a disparity map with a road region and a corresponding V-disparity map;
   extracting, from the V-disparity map, a road line Lv;
   obtaining, based on points having a height less than a predetermined height threshold above the road line Lv extracted from the V-disparity map, a sub-U-disparity map with the road; wherein a sub-U-disparity map relates to a part of the U-disparity map relating to the road;
   obtaining, from the V-disparity map, points below the extracted road line Lv with a distance from a camera for picking up the disparity map that is less than a predetermined distance threshold;
   extracting, from the disparity map, points that correspond to the points obtained from the V-disparity map;
   projecting the points extracted from the disparity map onto the sub-U-disparity map as reliable road points;
   extracting, from line segments obtained by a straight line fitting based on the reliable road points, road edge line segments that satisfy a predetermined road edge condition from the sub-U-disparity map,
   wherein the predetermined road edge condition includes the following: the sum of the absolute value of a horizontal and vertical intercepts of such a line segment, is the minimum value from all of the line segments; and the real length corresponding to the line segment in a real-three-dimensional world coordinate system is greater than a predetermined length threshold;
   wherein the horizontal intercept is the intersection between a straight line corresponding to such a line segment and the horizontal axis; and the vertical intercept is the intersection between a straight line corresponding to such a line segment and the vertical axis;

extracting the road edge from the sub-U-disparity map, by;

calculating an end point of an extracted road edge line segment when a road edge line segment is extracted, determining a region of interest for extracting the next road edge line segment by setting an angle change range based on the angle of the extracted road edge line segment and a region in an angle change range, and extracting the next road edge line segment with a start point that is the calculated end point from the region of interest; and

repeating the process of extracting the road edge line segment, until no road edge line segment can be extracted.

2. The method for detecting a road edge according to claim 1,

wherein the step of obtaining the sub-U-disparity map with the road based on points having a height less than the predetermined height threshold above the road line Lv extracted from the V-disparity map, comprises the steps of

extracting points that satisfy $y < c_1 \cdot d + c_2 + H$ from the V-disparity map, where H is a positive value corresponding to a predetermined vertical height above the ground in the three-dimensional real world,

obtaining, from the disparity map, points corresponding to the points extracted from the V-disparity map, and projecting the points obtained from the disparity map onto the U-disparity map so as to obtain the sub-U-disparity map.

3. The method for detecting a road edge according to claim 1, further comprising the step of
extracting the road edge from the disparity map, based on the road edge extracted from the sub-U-disparity map.

4. The method for detecting a road edge according to claim 3, further comprising the steps of
excluding points on the outside of the road edge in the V-disparity map from road candidate points based on the road edge extracted from the disparity map, and performing a road detection based on the road candidate points after the exclusion.

5. The method for detecting a road edge according to claim 3,

wherein the step of extracting the road edge from the disparity map based on the road edge extracted from the sub-U-disparity map, comprises the step of

extracting, from the disparity map as points on the road edge, points of which (a) horizontal distances between points projected in the U-disparity map and the road edge in the U-disparity map are less than a first predetermined distance and (b) vertical distances between points projected in the V-disparity map and the road edge in the V-disparity map are less than a second predetermined distance.

6. An apparatus (4000) for detecting a road edge, the apparatus comprising:

a disparity map obtainment unit (4100) configured to obtain a disparity map with a road region and a corresponding V-disparity map;

a road line extraction unit (4200) configured to extract, from the V-disparity map, a road line Lv;

a sub-U-disparity map obtainment unit (4300) configured to obtain, based on points having a height less than a predetermined height threshold above the road line Lv extracted from the V-disparity map, a sub-U-disparity map with the road, wherein a sub-U-disparity map relates to a part of the U-disparity map relating to the road;

a reliable road point extraction unit configured to obtain, from the V-disparity map, points below the extracted road line Lv with a distance from a camera for picking up the disparity map that is less than a predetermined distance threshold, extract, from the disparity map, points that correspond to the points obtained from the V-disparity map, and project the points extracted from the disparity map onto the sub-U-disparity map as reliable road points;

a road edge line segment extraction unit configured to extract, from line segments obtained by a straight line fitting based on the reliable road points, road edge line segments that satisfy a predetermined road edge condition from the sub-U-disparity map; and

wherein the predetermined road edge condition includes the following: the sum of the absolute value of a horizontal and vertical intercepts is the minimum value from all of the line segments; and the real length corresponding to the line segment in the real-three-dimensional world coordinate system is greater than a predetermined length threshold;

wherein the horizontal intercept is the intersection between a straight line corresponding to such a line segment and the horizontal axis; and the vertical intercept is the intersection between a straight line corresponding to such a line segment and the vertical axis;
a road edge extraction unit (4400) configured to extract the road edge from the sub-U-disparity map
wherein the road edge line segment extraction unit
calculates an end point of an extracted road edge line segment, determines a region of interest for extracting the next road edge line segment by setting an angle change range based on the angle of the extracted road edge line segment and a region in an angle change range, and extracts the next road edge line segment with a start point that is the calculated end point from the region of interest, when a road edge line segment is extracted; and
repeats the process of extracting the road edge line segment, until no road edge line segment can be extracted.

7. The apparatus for detecting a road edge according to claim 6,

wherein the sub-U-disparity map obtainment unit (4300)
extracts points that satisfy y<c1*d+c2+H from the V-disparity map, where H is a positive value corresponding to a predetermined vertical height above the ground in the three-dimensional real world,
obtains, from the disparity map, points corresponding to the points extracted from the V-disparity map, and
projects the points obtained from the disparity map onto the U-disparity map so as to obtain the sub-U-disparity map.

**Patentansprüche**

1. Verfahren zum Ermitteln eines Straßenrandes, wobei das Verfahren die Schritte umfasst:

Erlangen einer Disparitätskarte mit einem Straßenbereich und einer entsprechenden V-Disparitätskarte;
Extrahieren einer Straßenlinie Lv aus der V-Disparitätskarte;
Erlangen einer Sub-U-Disparitätskarte mit der Straße auf der Grundlage von Punkten, die eine geringere Höhe als einen vorbestimmten Höhenschwellenwert über der aus der V-Disparitätskarte extrahierten Straßenlinie Lv aufweisen, worin eine Sub-U-Disparitätskarte sich auf einen Teil der U-Disparitätskarte bezieht, der sich auf die Straße bezieht;
Erlangen, aus der V-Disparitätskarte, von Punkten unterhalb der extrahierten Straßenlinie Lv mit einem Abstand von einer Kamera zum Aufnehmen der Disparitätskarte, der geringer als ein vorbestimmter Abstandsschwellenwert ist;
Extrahieren von Punkten aus der Disparitätskarte, die den aus der V-Disparitätskarte erlangten Punkten entsprechen;
Projizieren der aus der Disparitätskarte extrahierten Punkte auf die Sub-U-Disparitätskarte als zuverlässige Straßenpunkte;
Extrahieren von Straßenrandliniensegmenten, die eine vorbestimmte Straßenrandbedingung erfüllen, aus der Sub-U-Disparitätskarte, und zwar aus Liniensegmenten, die durch eine Geradenanpassung auf der Grundlage der zuverlässigen Straßenpunkte erlangt werden,
worin die vorbestimmte Straßenrandbedingung Folgendes einschließt: die Summe der absoluten Beträge eines horizontalen und eines vertikalen Schnittpunkts eines solchen Liniensegments ist der Minimalwert aller Liniensegmente; und die reale Länge, die dem Liniensegment in einem dreidimensionalen Realwelt-Koordinatensystem entspricht, ist größer als ein vorbestimmter Längenschwellenwert;
worin der horizontale Schnittpunkt der Schnittpunkt zwischen einer geraden Linie, die einem solchen Liniensegment entspricht, und der horizontalen Achse ist; und der vertikale Schnittpunkt der Schnittpunkt zwischen einer geraden Linie, die einem solchen Liniensegment entspricht, und der vertikalen Achse ist;
Extrahieren des Straßenrandes aus der Sub-U-Disparitätskarte durch:

Berechnen eines Endpunkts eines extrahierten Straßenrandliniensegments, wenn ein Straßenrandliniensegment extrahiert wird, Bestimmen eines in Betracht kommenden Bereichs zum Extrahieren des nächsten Straßenrandliniensegments durch Festlegen eines Winkeländerungsbereichs auf der Grundlage des Winkels des extrahierten Straßenrandliniensegments und eines Bereichs in einem Winkeländerungsbereich, und Extrahieren des nächsten Straßenrandliniensegments mit einem Startpunkt, welcher der berechnete Endpunkt aus dem in Betracht kommenden Bereich ist; und
Wiederholen des Prozesses des Extrahierens des Straßenrandliniensegments, bis kein Straßenrandliniensegment extrahiert werden kann.

2. Verfahren zum Ermitteln eines Straßenrandes nach Anspruch 1,
worin der Schritt des Erlangens der Sub-U-Disparitätskarte mit der Straße auf der Grundlage von Punkten, die eine geringere Höhe als den vorbestimmten Höhenschwellenwert über der aus der V-Disparitätskarte extrahierten Straßenlinie Lv aufweisen, die Schritte umfasst:

Extrahieren von Punkten, die $y < c_1 * d + c_2 + H$ erfüllen, aus der V-Disparitätskarte, wobei H ein positiver Wert ist, der einer vorbestimmten vertikalen Höhe über dem Boden in der dreidimensionalen realen Welt entspricht,
Erlangen von Punkten aus der Disparitätskarte, die den aus der V-Disparitätskarte extrahierten Punkten entsprechen, und
Projizieren der aus der Disparitätskarte erhaltenen Punkte auf die U-Disparitätskarte, um dadurch die Sub-U-Disparitätskarte zu erlangen.

3. Verfahren zum Ermitteln eines Straßenrandes nach Anspruch 1, ferner den Schritt umfassend:
Extrahieren des Straßenrandes aus der Disparitätskarte auf der Grundlage des aus der Sub-U-Disparitätskarte extrahierten Straßenrandes.

4. Verfahren zum Ermitteln eines Straßenrandes nach Anspruch 3, ferner die Schritte umfassend:
Ausschließen von Punkten auf der Außenseite des Straßenrandes in der V-Disparitätskarte aus Straßenpunkt-Kandidaten auf der Grundlage des aus der Disparitätskarte extrahierten Straßenrandes, und Durchführen einer Straßenermittlung auf der Grundlage der Straßenpunkt-Kandidaten nach dem Ausschluss.

5. Verfahren zum Ermitteln eines Straßenrandes nach Anspruch 3,
worin der Schritt des Extrahierens des Straßenrandes aus der Disparitätskarte auf der Grundlage des aus der Sub-U-Disparitätskarte extrahierten Straßenrandes den Schritt umfasst:
Extrahieren von Punkten aus der Disparitätskarte als Punkte auf dem Straßenrand, von denen (a) horizontale Abstände zwischen in die U-Disparitätskarte projizierten Punkten und dem Straßenrand in der U-Disparitätskarte geringer als ein erster vorbestimmter Abstand sind und (b) vertikale Abstände zwischen in die V-Disparitätskarte projizierten Punkten und dem Straßenrand in der V-Disparitätskarte geringer als ein zweiter vorbestimmter Abstand sind.

6. Vorrichtung (4000) zum Ermitteln eines Straßenrandes, wobei die Vorrichtung umfasst:

eine Disparitätskarten-Erfassungseinheit (4100), die dafür konfiguriert ist, eine Disparitätskarte mit einem Straßenbereich und eine entsprechende V-Disparitätskarte zu erlangen;
eine Straßenlinien-Extraktionseinheit (4200), die dafür konfiguriert ist, aus der V-Disparitätskarte eine Straßenlinie Lv zu extrahieren;
eine Sub-U-Disparitätskarten-Erlangungseinheit (4300), die dafür konfiguriert ist, auf der Grundlage von Punkten, die eine geringere Höhe als ein vorbestimmter Höhenschwellenwert über der aus der V-Disparitätskarte extrahierten Straßenlinie Lv aufweisen, eine Sub-U-Disparitätskarte mit der Straße zu erlangen, worin eine Sub-U-Disparitätskarte sich auf einen Teil der U-Disparitätskarte bezieht, der sich auf die Straße bezieht;
eine Extraktionseinheit für zuverlässige Straßenpunkte, die dafür konfiguriert ist: aus der V-Disparitätskarte Punkte unterhalb der extrahierten Straßenlinie Lv mit einem Abstand von einer Kamera zum Aufnehmen der Disparitätskarte zu erlangen, der geringer als ein vorbestimmter Abstandsschwellenwert ist; aus der Disparitätskarte Punkte zu extrahieren, die den aus der V-Disparitätskarte erlangten Punkten entsprechen; und die aus der Disparitätskarte extrahierten Punkte als zuverlässige Straßenpunkte auf die Sub-U-Disparitätskarte zu projizieren;
eine Straßenrandliniensegment-Extraktionseinheit, die dafür konfiguriert ist, aus Liniensegmenten, die durch eine Geradenanpassung auf der Grundlage der zuverlässigen Straßenpunkte erlangt werden, Straßenrandliniensegmente aus der Sub-U-Disparitätskarte zu extrahieren, die eine vorbestimmte Straßenrandbedingung erfüllen; und
worin die vorbestimmte Straßenrandbedingung Folgendes einschließt: die Summe der absoluten Beträge eines horizontalen und eines vertikalen Schnittpunkts eines solchen Liniensegments ist der Minimalwert aller Liniensegmente; und die reale Länge, die dem Liniensegment in einem dreidimensionalen Realwelt-Koordinatensystem entspricht, ist größer als ein vorbestimmter Längenschwellenwert;
worin der horizontale Schnittpunkt der Schnittpunkt zwischen einer geraden Linie, die einem solchen Liniensegment entspricht, und der horizontalen Achse ist; und der vertikale Schnittpunkt der Schnittpunkt zwischen einer geraden Linie, die einem solchen Liniensegment entspricht, und der vertikalen Achse ist;
eine Straßenrand-Extraktionseinheit (4400), die dafür konfiguriert ist, den Straßenrand aus der Sub-U-Disparitätskarte zu extrahieren;
worin die Straßenrandliniensegment-Extraktionseinheit:

einen Endpunkt eines extrahierten Straßenrandliniensegments berechnet; einen in Betracht kommenden Bereich zum Extrahieren des nächsten Straßenrandliniensegments durch Festlegen eines Winkeländerungsbereichs auf der Grundlage des Winkels des extrahierten Straßenrandliniensegments und eines Bereichs in einem Winkeländerungsbereich bestimmt; und das nächste Straßenrandliniensegment mit einem Startpunkt, welcher der berechnete Endpunkt ist, aus dem in Betracht kommenden Bereich extrahiert, wenn ein Straßenrandliniensegment extrahiert wird; und
den Vorgang des Extrahierens des Straßenrandliniensegments wiederholt, bis kein Straßenrandliniensegment mehr extrahiert werden kann.

**7.** Vorrichtung zum Ermitteln eines Straßenrandes nach Anspruch 6,

worin die Sub-U-Disparitätskarten-Ermittlungseinheit (4300):
Punkte, die $y < c_1 * d + c_2 + H$ erfüllen, aus der V-Disparitätskarte extrahiert, wobei H ein positiver Wert ist, der einer vorbestimmten vertikalen Höhe über dem Boden in der dreidimensionalen realen Welt entspricht,
aus der Disparitätskarte Punkte erlangt, die den aus der V-Disparitätskarte extrahierten Punkten entsprechen, und
die aus der Disparitätskarte erlangten Punkte auf die U-Disparitätskarte projiziert, um dadurch die Sub-U-Disparitätskarte zu erlangen.

## Revendications

**1.** Procédé pour détecter un bord de route, le procédé comprenant les étapes constituées par :

l'obtention d'une carte de disparités avec une région de route et une carte de disparités V correspondante ;
l'extraction, à partir de la carte de disparités V, d'une ligne de route Lv ;
l'obtention, sur la base de points qui présentent une hauteur qui est inférieure à un seuil de hauteur prédéterminé au-dessus de la ligne de route Lv qui est extraite à partir de la carte de disparités V, d'une carte de sous-disparités U avec la route ; dans lequel une carte de sous-disparités U concerne une partie de la carte de disparités U se rapportant à la route ;
l'obtention, à partir de la carte de disparités V, de points au-dessous de la ligne de route extraite Lv selon une distance par rapport à une caméra pour capturer la carte de disparités qui est inférieure à un seuil de distance prédéterminé ;
l'extraction, à partir de la carte de disparités, de points qui correspondent aux points qui sont obtenus à partir de la carte de disparités V ;
la projection des points qui sont extraits à partir de la carte de disparités sur la carte de sous-disparités U en tant que points de route fiables ; et
l'extraction, à partir de segments de ligne qui sont obtenus au moyen d'un ajustement de ligne droite sur la base des points de route fiables, de segments de ligne de bord de route qui satisfont une condition de bord de route prédéterminée à partir de la carte de sous-disparités U ;
dans lequel la condition de bord de route prédéterminée inclut ce qui suit : la somme des valeurs absolues d'interceptions horizontale et verticale d'un tel segment de ligne est la valeur minimum parmi tous les segments de ligne ; et la longueur réelle qui correspond au segment de ligne dans un système de coordonnées du monde réel tridimensionnel est plus grande qu'un seuil de longueur prédéterminé ;
dans lequel l'interception horizontale est l'intersection entre une ligne droite qui correspond à un tel segment de ligne et l'axe horizontal ; et l'interception verticale est l'intersection entre une ligne droite qui correspond à un tel segment de ligne et l'axe vertical ;
l'extraction du bord de route à partir de la carte de sous-disparités U de la façon qui suit :

en calculant un point de fin d'un segment de ligne de bord de route extrait lorsqu'un segment de ligne de bord de route est extrait, en déterminant une région d'intérêt pour extraire le segment de ligne de bord de route suivant en définissant une plage de variation d'angle sur la base de l'angle du segment de ligne de bord de route extrait et d'une région dans une plage de variation d'angle, et en extrayant le segment de ligne de bord de route suivant avec un point de début qui est le point de fin calculé qui est issu de la région d'intérêt ; et

la répétition du processus d'extraction du segment de ligne de bord de route jusqu'à ce qu'aucun segment de ligne de bord de route ne puisse être extrait.

2. Procédé pour détecter un bord de route selon la revendication 1,
dans lequel l'étape d'obtention de la carte de sous-disparités U avec la route sur la base de points qui présentent une hauteur qui est inférieure au seuil de hauteur prédéterminé au-dessus de la ligne de route Lv qui est extraite à partir de la carte de disparités V comprend les étapes constituées par :

l'extraction de points qui satisfont $y < c_1 *d + c_2 + H$ à partir de la carte de disparités V, où H est une valeur positive qui correspond à une hauteur verticale prédéterminée au-dessus du sol dans le monde réel tridimensionnel ;
l'obtention, à partir de la carte de disparités, de points qui correspondent aux points qui sont extraits à partir de la carte de disparités V ; et
la projection des points qui sont obtenus à partir de la carte de disparités sur la carte de disparités U de manière à obtenir la carte de sous-disparités U.

3. Procédé pour détecter un bord de route selon la revendication 1, comprenant en outre l'étape constituée par :
l'extraction du bord de route à partir de la carte de disparités, sur la base du bord de route qui est extrait à partir de la carte de sous-disparités U.

4. Procédé pour détecter un bord de route selon la revendication 3, comprenant en outre les étapes constituées par :
l'exclusion de points sur l'extérieur du bord de route dans la carte de disparités V de points candidats de route sur la base du bord de route qui est extrait à partir de la carte de disparités, et la réalisation d'une détection de route sur la base des points candidats de route après l'exclusion.

5. Procédé pour détecter un bord de route selon la revendication 3,

dans lequel l'étape d'extraction du bord de route à partir de la carte de disparités sur la base du bord de route qui est extrait à partir de la carte de sous-disparités U comprend l'étape constituée par :
l'extraction, à partir de la carte de disparités, en tant que points sur le bord de route, de points pour lesquels (a) des distances horizontales entre des points qui sont projetés dans la carte de disparités U et le bord de route dans la carte de disparités U sont inférieures à une première distance prédéterminée et pour lesquels (b) des distances verticales entre des points qui sont projetés dans la carte de disparités V et le bord de route dans la carte de disparités V sont inférieures à une seconde distance prédéterminée.

6. Appareil (4000) pour détecter un bord de route, l'appareil comprenant :

une unité d'obtention de carte de disparités (4100) qui est configurée pour obtenir une carte de disparités avec une région de route et une carte de disparités V correspondante ;
une unité d'extraction de ligne de route (4200) qui est configurée pour extraire, à partir de la carte de disparités V, une ligne de route Lv ;
une unité d'obtention de carte de sous-disparités U (4300) qui est configurée pour obtenir, sur la base de points qui présentent une hauteur qui est inférieure à un seuil de hauteur prédéterminé au-dessus de la ligne de route Lv qui est extraite à partir de la carte de disparités V, une carte de sous-disparités U avec la route ; dans lequel une carte de sous-disparités U concerne une partie de la carte de disparités U se rapportant à la route ;
une unité d'extraction de points de route fiables qui est configurée pour obtenir, à partir de la carte de disparités V, des points au-dessous de la ligne de route extraite Lv selon une distance par rapport à une caméra pour capturer la carte de disparités qui est inférieure à un seuil de distance prédéterminé, pour extraire, à partir de la carte de disparités, des points qui correspondent aux points qui sont obtenus à partir de la carte de disparités V et pour projeter les points qui sont extraits à partir de la carte de disparités sur la carte de sous-disparités U en tant que points de route fiables ; et
une unité d'extraction de segments de ligne de bord de route qui est configurée pour extraire, à partir de segments de ligne qui sont obtenus au moyen d'un ajustement de ligne droite sur la base des points de route fiables, des segments de ligne de bord de route qui satisfont une condition de bord de route prédéterminée à partir de la carte de sous-disparités U;
dans lequel la condition de bord de route prédéterminée inclut ce qui suit : la somme de la valeur absolue d'interceptions horizontale et verticale est la valeur minimum parmi tous les segments de ligne ; et la longueur réelle qui correspond au segment de ligne dans le système de coordonnées du monde réel tridimensionnel est plus grande qu'un seuil de longueur prédéterminé ; et

dans lequel l'interception horizontale est l'intersection entre une ligne droite qui correspond à un tel segment de ligne et l'axe horizontal ; et l'interception verticale est l'intersection entre une ligne droite qui correspond à un tel segment de ligne et l'axe vertical ;

une unité d'extraction de bord de route (4400) qui est configurée pour extraire le bord de route à partir de la carte de sous-disparités U ;

dans lequel l'unité d'extraction de segments de ligne de bord de route :

calcule un point de fin d'un segment de ligne de bord de route extrait, détermine une région d'intérêt pour extraire le segment de ligne de bord de route suivant en définissant une plage de variation d'angle sur la base de l'angle du segment de ligne de bord de route extrait et d'une région dans une plage de variation d'angle, et extrait le segment de ligne de bord de route suivant avec un point de début qui est le point de fin calculé qui est issu de la région d'intérêt, lorsqu'un segment de ligne de bord de route est extrait ; et répète le processus d'extraction du segment de ligne de bord de route jusqu'à ce qu'aucun segment de ligne de bord de route ne puisse être extrait.

7. Appareil pour détecter un bord de route selon la revendication 6,
dans lequel l'unité d'obtention de carte de sous-disparités U (4300) :

extrait des points qui satisfont $y < c1 * d + c2 + H$ à partir de la carte de disparités V, où H est une valeur positive qui correspond à une hauteur verticale prédéterminée au-dessus du sol dans le monde réel tridimensionnel ;

obtient, à partir de la carte de disparités, des points qui correspondent aux points qui sont extraits à partir de la carte de disparités V ; et

projette les points qui sont obtenus à partir de la carte de disparités sur la carte de disparités U de manière à obtenir la carte de sous-disparités U.

# FIG.1

DRIVING ASSISTANCE SYSTEM

ROAD RELATED PART

LANE/ ROAD DETECTION WARNING SYSTEM

ROAD EDGE DETECTION UNIT

# FIG.2

BINOCULAR CAMERA

CHIP

LEFT AND RIGHT IMAGES

EP 2 779 025 B1

# FIG.3

1000

```
( START )
    │
    ▼
┌──────────────────────────────────────────────────┐
│  OBTAINING DISPARITY MAP WITH ROAD REGION          │ ～S1100
│  AND CORRESPONDING V-DISPARITY MAP                 │
└──────────────────────────────────────────────────┘
    │
    ▼
┌──────────────────────────────────────────────────┐
│  EXTRACTING ROAD LINE Lv FROM V-DISPARITY MAP      │ ～S1200
└──────────────────────────────────────────────────┘
    │
    ▼
┌──────────────────────────────────────────────────┐
│  OBTAINING SUB-U-DISPARITY MAP WITH ROAD,          │ ～S1300
│  BASED ON ROAD LINE Lv FITTED IN V-DISPARITY MAP   │
└──────────────────────────────────────────────────┘
    │
    ▼
┌──────────────────────────────────────────────────┐
│  SELF-ADAPTIVELY EXTRACTING ROAD                   │ ～S1400
│  EDGE FROM SUB-U-DISPARITY MAP                     │
└──────────────────────────────────────────────────┘
    │
    ▼
(  END  )
```

# FIG.4

(a)                    (b)

# FIG.5

(a)

(b)

# FIG.6

(a)

EXTRACTED
DISPARITY MAP

(b)

(c)

# FIG.7

1400

```
        ┌─────────┐
        │  START  │
        └─────────┘
             │
             ▼
┌──────────────────────────┐
│   EXTRACTING RELIABLE     │
│     ROAD POINTS FROM      │~S1410
│    SUB-DISPARITY MAP      │
└──────────────────────────┘
             │
             ▼
┌──────────────────────────┐
│    EXTRACTING FIRST ROAD  │
│     EDGE LINE SEGMENT,    │~S1420
│  BASED ON RELIABLE ROAD POINTS│
└──────────────────────────┘
             │
             ▼
         ╱────────╲          S1430
       ╱  ROAD EDGE  ╲       NO
      ⟨ LINE SEGMENT IS EXTRACTED ⟩──────┐
       ╲      ?     ╱                    │
         ╲────────╱                      │
             │ YES                       │
             ▼                           │
┌──────────────────────────┐            │
│ EXTRACTING ROAD EDGE LINE SEGMENT│     │
│ IN CONTINUATION OF THE PREVIOUSLY │~S1440│
│ EXTRACTED ROAD EDGE LINE SEGMENT │     │
└──────────────────────────┘            │
             │                           │
             ▼◄──────────────────────────┘
        ┌─────────┐
        │   END   │
        └─────────┘
```

23

# FIG.8

(a)

(b)

(c)

(d)

(e)

# FIG.9

(a)            (b)

# FIG.10

1440

START

CALCULATING END POINT
OF THE EXTRACTED ROAD
EDGE LINE SEGMENT          ~S1441

DETERMINING REGION OF
INTEREST FOR EXTRACTING
THE NEXT ROAD EDGE LINE SEGMENT    ~S1442

EXTRACTING FROM REGION OF
INTEREST, THE NEXT ROAD EDGE LINE
SEGMENT WHICH THE START POINT     ~S1443
IS THE CALCULATED END POINT

END

## FIG.11

## FIG.12

## FIG.13

(a)                                    (b)

# FIG.14

# FIG.15

4000

```
  ┌─────────────────────┐4100          ┌─────────────────────┐4200
  │   DISPARITY MAP      │              │     ROAD LINE        │
  │  OBTAINMENT UNIT     │───────────▶  │  EXTRACTION UNIT     │
  └─────────────────────┘              └─────────────────────┘
```

```
           ┌──────────────────────┐
           │   SUB-U-DISPARITY     │
           │        MAP            │~4300
           │  OBTAINMENT UNIT      │
           └──────────────────────┘
                      │
                      ▼
           ┌──────────────────────┐
           │    ROAD EDGE          │
           │  SELF-ADAPTIVE        │~4400
           │  EXTRACTION UNIT      │
           └──────────────────────┘
```

# FIG.16

EP 2 779 025 B1

## REFERENCES CITED IN THE DESCRIPTION

### Patent documents cited in the description

- US 2011063097
- US 2010017060
- CN 201110434873X, YouGanmei
- CN 201210513215, ChenChao

### Non-patent literature cited in the description

- U-V-disparity: an efficient algorithm for stereovision based scene analysis. **ZHENCHENG HU et al.** Intelligent Vehicles Symposium, 2005. Proceedings. IEEE Las Vegas, NV, USA June 6-8, 2005, Piscataway, NJ, USA. IEEE, 06 June 2005, 48-54
- Curb Detection Based on a Multi-Frame Persistence map for Urban Driving Scenarios. **FLORIN ONIGA et al.** Intelligent Transportation Systems, 2008. ITSC 2008. 11th International IEEE Conference ON. IEEE, 12 October 2008, 67-72
- **ZHENCHENG HU ; FRANCISCO LAMOSA ; KEII-CHU UCHIMURA.** A Complete U-V-Disparity Study for Stereovision Based 3D Driving Environment Analysis. *3DIM 2005: 204-211*
- **JUN ZHAO ; MARK ALBERT WHITTY ; JAYAN-THA KATUPITIYA.** Detection of Non-Flat Ground Surfaces Using V-Disparity Images. *IROS 2009: 4584-4589*